# FASCICULE DE BREVET EUROPEEN

(11) **EP 1 516 201 B1**
(45) Date de publication et mention de la délivrance du brevet: **31.05.2006**
(21) Numéro de dépôt: 03753630.7
(22) Date de dépôt: 20.06.2003
(51) Int. Cl.: G01S 7/52

(54) **STRUCTURE D'ENTRE POUR ECHOGRAPHIE A ULTRASONS**
EINGANGSANORDNUNG FÜR DIE ULTRASCHALLECHOGRAPHIE
INPUT ARRANGEMENT FOR ULTRASONIC ECHOGRAPHY

(30) Priorité: 21.06.2002 FR 0207744
(43) Date de publication de la demande: 23.03.2005
(73) Titulaire: Thales Ultrasonics SAS, 92200 Neuilly-sur-Seine (FR)
(72) Inventeur: POMATA, Francesco, Thales Intellectual Property, F-94117 Arcueil Cedex (FR); MONINI, Didier, Thales Intellectual Property, F-94117 Arcueil Cedex (FR)
(74) Mandataire: Chaverneff, Vladimir
(86) Numéro de dépôt international: PCT/FR2003/001906
(87) Numéro de publication internationale: WO 2004/001444

(56) Documents cités:
- EP-A- 0 895 094
- US-A- 5 628 322
- US-A- 5 911 692
- US-A1- 2002 028 009
- US-B1- 6 290 648
- US-B1- 6 306 091

## Description

La présente invention se rapporte à une structure d'entrée pour échographe à ultrasons.

Les structures d'entrées (« Front End Conditioning » en anglais) auxquelles se rapporte l'invention sont celles interconnectant la sonde ultrasonore, l'émetteur d'impulsions et le préamplificateur. De telles structures sont décrites par exemple dans les brevets US 6 306 091, 6 290 648, 5 911 692 ou 5 628 322. Ces structures comportent un diplexeur et éventuellement un multiplexeur. Il existe des circuits intégrés dédiés, tels que les circuits SUPERTERX HV 232 et HV 20 822, ..., pour assurer la fonction multiplexeur.

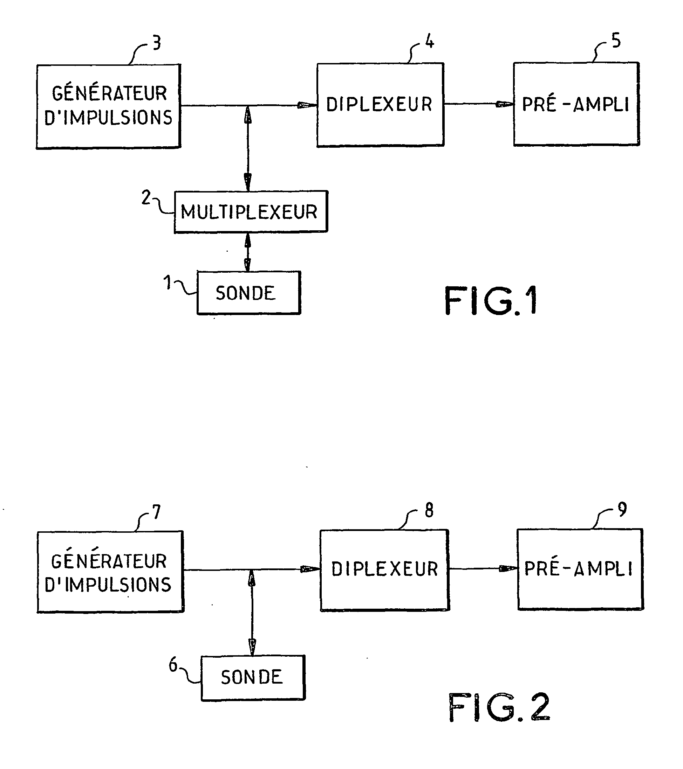

On a représenté en figure 1 le bloc-diagramme simplifié d'une structure d'entrée à multiplexeur. Cette structure comporte une sonde à ultrasons 1 reliée bidirectionnellement à un multiplexeur 2. Ce multiplexeur est relié unidirectionnellement à la sortie d'un générateur d'impulsions 3 et bidirectionnellement à un diplexeur 4. Le diplexeur est d'autre part relié unidirectionnellement à un préamplificateur 5. De façon typique, la liaison entre la sonde 1 et le multiplexeur 2 comporte 128, 192 ou 256 canaux, alors que toutes les autres liaisons comportent 64 canaux.

La structure classique représentée en figure 2 ne comporte pas de multiplexeur. La sonde 6 est reliée à la sortie d'un générateur d'impulsions 7 et à l'entrée d'un diplexeur 8 dont la sortie est reliée à l'entrée d'un préamplificateur 9.

Toutes les liaisons entre ces différents éléments comportent 128, 192 ou 256 canaux.

La structure avec multiplexeur présente l'avantage d'un plus faible nombre de canaux de liaison entre éléments et d'un plus faible prix de revient. En fait, le prix de revient d'une structure analogique est sensiblement proportionnel au nombre de canaux de ces liaisons. Bien entendu, à ce prix, il faut ajouter le prix du multiplexeur, mais ce dernier est inférieur à celui des canaux.

En outre, la structure à multiplexeur présente les inconvénients suivants :
- la sensibilité globale de la machine est réduite. Le multiplexeur présente à l'état passant une résistance d'environ 30 Ω, et cette résistance augmente le bruit affectant les signaux reçus par la sonde et transmis au préamplificateur d'au moins 1 dB ;
- aux fréquences les plus élevées de la plage de fréquences transmises, le multiplexeur présente un niveau élevé de diaphonie, de l'ordre de 40 dB. Cette diaphonie agit sur la répartition spatiale du faisceau ultrasonore et diminue la résolution de la machine ;
- le multiplexeur nécessite une alimentation en énergie dédiée à une tension supérieure à celle utilisée par le générateur d'impulsions, ce qui augmente la complexité de l'alimentation en énergie de la machine. ;
- les tensions limites supportables par le multiplexeur sont généralement inférieures à celles que peut supporter le générateur d'impulsions, ce qui limite la valeur crête de la puissance pouvant être émise par le générateur d'impulsions.

Bien que la structure sans multiplexeur soit plus onéreuse que celle comportant un multiplexeur, elle permet d'éviter tous ces problèmes liés au multiplexeur.

La présente invention a pour objet une structure d'entrée pour échographe à ultrasons qui soit moins onéreuse que la structure connue sans multiplexeur, et ne présentant pas les inconvénients précités de la structure connue avec multiplexeur, si elle comporte un multiplexeur.

La structure d'entrée conforme à l'invention comporte un diplexeur branché entre, d'une part, la sonde et le générateur d'impulsions, et d'autre part le préamplificateur, ce diplexeur étant du type comprenant un pont de diodes dont un sommet est relié par une première résistance à une source de tension positive et dont le sommet opposé est relié par une deuxième résistance à une source de tension négative, un troisième sommet de ce pont recevant via un condensateur et une résistance les signaux d'entrée à transmettre ou à atténuer selon leur provenance, le quatrième sommet de ce pont étant relié à la masse par un condensateur en série avec un circuit parallèle comprenant une résistance et deux diodes montées en antiparallèle, l'autre pôle desdites sources de tension, du générateur d'impulsions et de la sonde étant relié à la masse, et selon l'invention, on branche dans le diplexeur entre les deux premiers sommets du pont une résistance, et on branche une diode en parallèle sur chaque résistance reliant l'un des deux premiers sommets du pont à une source de tension, ces deux diodes étant montées dans le sens passant de la source de tension négative vers la source de tension positive.

Selon une autre caractéristique de l'invention, on branche un multiplexeur entre, d'une part, le générateur d'impulsions, et d'autre part la sonde et le diplexeur.

La présente invention sera mieux comprise à la lecture de la description détaillée de plusieurs modes de réalisation, pris à titre d'exemples non limitatifs, et illustrée par le dessin annexé, sur lequel :
- la figure 1, déjà décrite ci-dessus, est un bloc-diagramme d'une structure d'entrée connue pour échographe à ultrasons avec multiplexeur ;
- la figure 2, déjà décrite ci-dessus, est le bloc-diagramme d'une structure d'entrée connue pour échographe à ultrasons sans multiplexeur ;
- la figure 3 est un schéma d'un diplexeur de l'art antérieur pouvant être utilisé dans la structure de la figure 1 et de la figure 2 ;
- la figure 4 est un schéma d'un diplexeur conforme à l'invention ;
- la figure 5 est un diagramme de la caractéristique d'atténuation en fonction de la fréquence du diplexeur de la figure 4 ;
- la figure 6 est le schéma d'un multiplexeur conforme à l'invention ;
- la figure 7 est le bloc-diagramme d'une structure d'entrée conforme à l'invention, sans multiplexeur, et
- la figure 8 est le bloc-diagramme d'une structure d'entrée conforme à l'invention, avec multiplexeur.

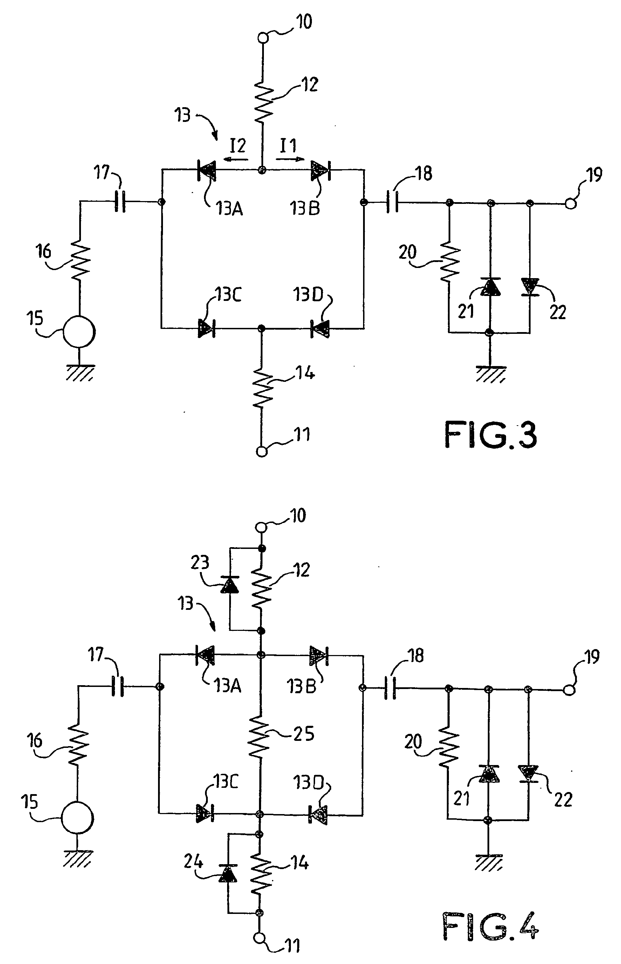

Pour mieux expliquer les avantages présentés par la structure d'entrée conforme à l'invention, et en particulier par son diplexeur, on va d'abord décrire en référence à la figure 3 un diplexeur de l'art antérieur et en rappeler brièvement le fonctionnement.

Ce diplexeur connu est alimenté en tension par une borne 10 reliée à un potentiel positif et par une borne 11 reliée à un potentiel négatif. Entre la borne 10 et la borne 11 sont branchés successivement une résistance 12, un pont de diodes 13, et une résistance 14. Les diodes 13A à 13D du pont 13 sont branchées dans le sens passant vis-à-vis du courant pouvant circuler de la borne 10 à la borne 11. Le générateur 15 de signaux d'entrée du diplexeur, en l'occurrence le générateur d'impulsions de l'échographe comportant ce diplexeur, est relié par une résistance 16 en série avec un condensateur 17 au point commun des diodes 13A et 13C représentant un des sommets du pont 13. Le sommet opposé du pont, qui est le point commun des diodes 13B et 13D est relié par un condensateur 18 à une borne de sortie 19. Entre la borne 19 et la masse sont branchés en parallèle : une résistance 20 et deux diodes 21, 22, ces dernières étant montées en anti-parallèle entre elles.

Le diplexeur connu décrit ci-dessus fonctionne de la façon suivante. En phase d'émission d'impulsions par le générateur 15, les diodes du pont 13 doivent présenter une tension de claquage inverse supérieure à la tension crête maximale des impulsions produites par ce générateur 15. Les tensions appliquées aux bornes 10 et 11 imposent dans les deux branches du pont 13 partant du sommet relié à la résistance 12 des courants 11 et 12 respectivement. Ces deux courants sont égaux si les diodes 13A-13B et 13C-13D sont appairées. Si, par exemple, la tension appliquée en 10 est égale à +5V et celle appliquée en 11 est égale à -5V, et la valeur des résistances 12 et 14 de 4 000 Ω, les courants I1 et I2 sont d'environ 1 mA, ce qui représente la valeur maximale du courant instantané pouvant passer entre les condensateurs 17 et 18. Un courant instantané supérieur à cette valeur rendrait non passantes les diodes 13A et 13D, ou 13B et 13C en fonction de son sens. Globalement, le pont 13 fonctionne en limiteur de courant. Il est facile de fixer la valeur maximale du courant, ce qui permet d'isoler le générateur d'impulsions du préamplificateur d'entrée. Les deux diodes 21, 22 limitent la tension sur la borne 19 (tension d'entrée du préamplificateur) à 0,6 V.

En phase de réception des échos recueillis par la sonde de l'échographe, la tension d'entrée du préamplificateur est très faible. On peut alors estimer que le courant impulsionnel passant par les condensateurs 17 et 18 et par le pont 13 est toujours inférieur à 1 mA. Il en résulte que les diodes du pont sont passantes et se comportent en résistances de faible valeur. Si l'on inverse les tensions appliquées aux bornes 10 et 11, le circuit de la figure 3 offre une isolation entrée/sortie faible, mais insuffisante pour lui permettre de se comporter en multiplexeur.

Selon l'invention, et comme représenté en figure 4, on augmente l'atténuation des impulsions émises par le générateur d'impulsions pendant la phase de réception des échos en ajoutant au diplexeur connu trois composants très peu coûteux. Ces composants sont deux diodes et une résistance. On ajoute en parallèle sur chacune des résistances 12 et 14 une diode 23, 24 respectivement, et on branche entre les résistances 12 et 14 une résistance 25. Les diodes 23 et 24 ont leurs cathodes dirigées vers la borne 10, c'est-à-dire qu'elles sont non passantes vis-à-vis du courant continu circulant de la borne 10 vers la borne 11. Les autres composants du circuit de la figure 4 étant identiques à ceux du circuit de la figure 3, sont affectés des mêmes références numériques.

En phase d'émission des impulsions d'exploration vers la sonde de l'échographe, les trois composants ajoutés 23 à 25 ne modifient pratiquement pas le fonctionnement du diplexeur. Si ces impulsions sont positives, elles passent par la diode 13C, par la résistance 25 et arrivent à la masse par la diode 23 et les diodes 13B et 22. La charge supplémentaire constituée par la résistance 25, choisie suffisamment élevée, est négligeable par rapport à celle représentée par la sonde, ce qui n'atténue pratiquement pas les impulsions reçues par la sonde. Le signal (de valeur négligeable) passant par la résistance 25 est dérivé vers la masse par les diodes 23 et 22. Lorsque les impulsions d'exploration sont négatives, le comportement du diplexeur est symétrique de celui exposé ci-dessus (impulsions passant par la diode 13A, la résistance 25, la diode 24 et les diodes 13D et 21).

En phase de réception des échos ultrasonores, le comportement du diplexeur de l'invention est semblable à celui du diplexeur connu, les diodes 23 et 24 étant non passantes.

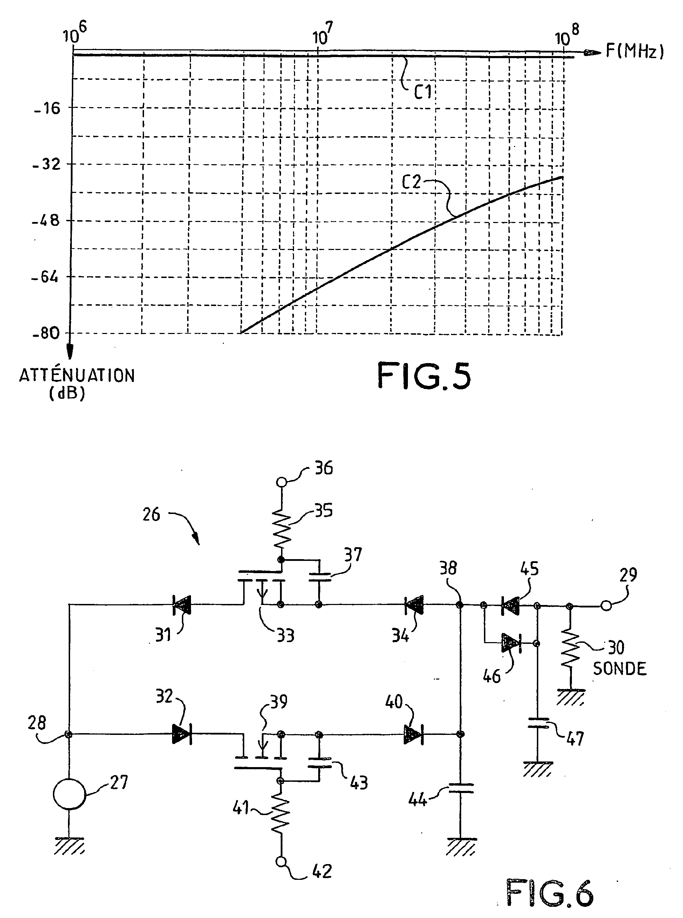

Si l'on permute les tensions alimentant les bornes 10 et 11, les diodes 13A à 13D sont rendues non passantes, tandis que les diodes 23 et 24 sont rendues passantes, et le courant d'alimentation peut traverser la résistance 25. Les deux diodes 23, 24, qui sont passantes, confèrent au diplexeur une atténuation très utile à l'état bloqué de celui-ci. Il en résulte que, selon un exemple de réalisation, le diplexeur présente une atténuation des impulsions provenant du générateur 15 supérieure à 60 dB à 10 MHz, comme on le voit d'après la courbe inférieure du diagramme de la figure 5. La valeur de cette atténuation peut être réglée à l'aide de la résistance 25. Plus la valeur de cette résistance est faible, plus l'atténuation est élevée. De plus, comme on le voit d'après la figure 5, le circuit de la figure 4 présente également l'atténuation de diaphonie requise d'un bon multiplexeur.

Sur cette figure 5, la courbe supérieure C1 correspond à l'atténuation des échos reçus, à l'état « passant » du diplexeur (atténuation inférieure à 1dB sur toute la bande de fréquences de 1 à 100 MHz), tandis que la courbe inférieure C2 correspond à l'atténuation à l'état « bloqué » du diplexeur.

On a représenté en figure 6 le schéma d'un exemple de réalisation d'un multiplexeur conforme à l'invention, et ne nécessitant pas d'alimentation en tension spécifique (c'est-à-dire à tension supérieure à la valeur crête des impulsions d'exploration). Ce multiplexeur peut recevoir des impulsions bipolaires.

Le multiplexeur 26 de la figure 6 est directement relié au générateur d'impulsions 27 par son entrée 28. Sa sortie 29 est reliée d'une part à la sonde, qui est simplement représentée par sa résistance équivalente d'entrée 30, et d'autre part à l'entrée du diplexeur D, qui est avantageusement celui de la figure 4.

Dans le multiplexeur 26, l'entrée 28 est reliée à la cathode d'une diode 31 et à l'anode d'une diode 32. L'anode de la diode 31 est reliée au drain d'un transistor 33 du type VMOS dont la source est reliée à la cathode d'une diode 34. La grille du transistor 33 est reliée par une résistance 35 à une borne 36 à laquelle est appliquée une tension de commande positive du transistor 33. Un condensateur 37 est relié entre la grille et la source du transistor 33. L'anode de la diode 34 est reliée à une borne 38.

La cathode de la diode 32 est reliée au drain d'un transistor VMOS 39 dont la source est reliée à l'anode d'une diode 40 et dont la grille est reliée par une résistance 41 à une borne 42 à laquelle est appliquée une tension de commande négative de commande du transistor 39. Un condensateur 43 relie la source du transistor 39 à sa grille. La cathode de la diode 40 est reliée à la borne 38 et est reliée par un condensateur 44 à la masse. Dans ce circuit de la figure 6, et comme c'est le cas pour les circuits des figures 3 et 4, les sources de tension ont un pôle relié à la masse (l'autre pôle étant relié à l'une des bornes 10, 11, 36, 42, selon le cas).

La borne 38 est reliée à la borne 29 par deux diodes 45, 46 montées en anti-parallèle. Un condensateur 47 est branché entre la borne 29 et la masse.

Le fonctionnement du multiplexeur 26 est le suivant. A l'état « passant » du multiplexeur, les impulsions positives émises par le générateur 27 passent par la diode 32, le transistor 39 et les diodes 40 et 46. Les impulsions négatives passent par la diode 31, le transistor 33 et les diodes 34 et 45. Bien entendu, les transistors 33 et 39 doivent être rendus passants par des tensions de commande appliquées aux bornes 36 et 42 respectivement.

A l'état « bloqué » du multiplexeur 26, les deux transistors sont rendus « ouverts » par les tensions de commande appliquées aux bornes 36 et 42 respectivement. Aucune impulsion ne devrait donc parvenir à la sortie 29, mais à cause de la capacité parasite source-drain de ces transistors, une faible partie de ces impulsions parvient à la borne 38, mais elle est court-circuitée par les condensateurs 44 et 47.

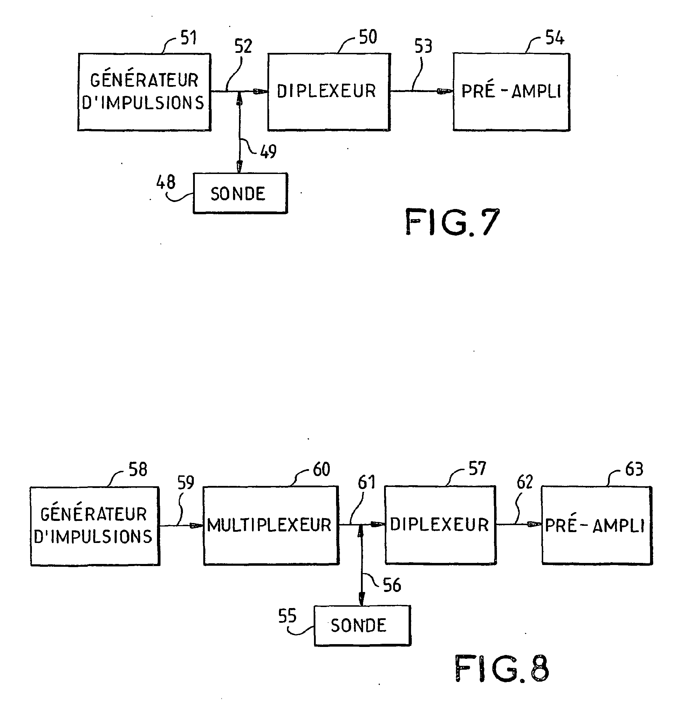

On a représenté en figure 7 le bloc-diagramme d'une structure d'entrée conforme à l'invention, sans multiplexeur. La sonde 48 est reliée par un câble multiconducteurs 49 à l'entrée du diplexeur 50. De même, le générateur d'impulsions 51 est relié par un câble multiconducteurs 52 au diplexeur 50. Le diplexeur est relié par une liaison multiconducteurs 53 au préamplificateur 54.

Le nombre de canaux du générateur d'impulsions 51 (c'est-à-dire le nombre d'impulsions différentes qu'il doit produire simultanément) dépend du nombre maximum de voies de la sonde 48, car en général, on peut relier à un échographe différentes sondes. Ce nombre de voies est généralement de 128, 192 ou 256. Bien entendu, le nombre de diplexeurs élémentaires composant le diplexeur 50 dépend de ce nombre maximal de voies. Par conséquent, le nombre de conducteurs des câbles 49 et 52 est de 128, 192 ou 256, selon ledit nombre maximal de voies. Par contre, le nombre de conducteurs de la liaison 53 est de 64.

Grâce à l'utilisation du diplexeur de l'invention dans la structure d'entrée décrite ci-dessus, on évite les inconvénients suivants dus à l'utilisation des multiplexeurs de l'art antérieur :
- on évite la résistance élevée à l'état passant du multiplexeur et on améliore la sensibilité de lecture des échos ;
- la diaphonie est inférieure à celle des meilleurs multiplexeurs connus ;
- on évite l'emploi d'une alimentation électrique dédiée du multiplexeur ; et
- il est possible d'éviter les limitations de tension imposées par les multiplexeurs connus.

On a représenté en figure 8 le bloc-diagramme d'une structure d'entrée d'échographe conforme à l'invention et comportant un multiplexeur en plus du diplexeur. Dans cette structure, la sonde 55 est reliée par un câble 56 multicanaux à l'entrée du diplexeur 57. Le générateur d'impulsions 58 est relié par une liaison multicanaux 59 à l'entrée d'un multiplexeur 60 dont la sortie est reliée par une liaison multicanaux 61 à l'entrée du diplexeur 57. Le diplexeur 57 est relié par une liaison multicanaux 62 au préamplificateur 63.

Selon un exemple de réalisation, le générateur 58 a 64 voies. Le nombre de diplexeurs élémentaires composant le diplexeur 57, de même que le nombre de voies de la liaison 61, est fonction du nombre maximal de voies de la sonde 55, et peut être de 128, 192 ou 256 selon les sondes utilisées. Le nombre de voies de la liaison 62 est ici de 64.

On peut évaluer grossièrement le coût de la structure d'entrée de la façon suivante. On prend comme coût de base, égal à 1 unité, le coût du générateur 58. Le coût d'un préamplificateur élémentaire (entrant dans la composition de l'ensemble 63) est de 6 unités, tandis que le coût d'un multiplexeur élémentaire de l'art antérieur de bonne qualité est de 1 unité, celui du diplexeur élémentaire (de l'invention ou de l'art antérieur) est de 0,1 unité, et celui du multiplexeur élémentaire de l'invention de 0,4 unité. Le tableau ci-dessous présente le coût global comparatif d'une structure d'entrée de l'art antérieur (S1), d'une structure d'entrée conforme à l'invention sans multiplexeur, selon la figure 7 (S2) et d'une structure d'entrée conforme à l'invention avec multiplexeur, selon la figure 8 (S3), et ce, successivement, pour 128, 192 et 256 canaux fournis par la sonde. Dans ce tableau, le générateur d'impulsions élémentaires est désigné par GI, le multiplexeur élémentaire de l'art antérieur par M1, celui de l'invention par M2, le diplexeur élémentaire de l'art antérieur par D1, celui de l'invention par D2 et un préamplificateur élémentaire par PA.

| | | | | |
|---|---|---|---|---|
| Solution | | Nombre canaux | | |
| | | 128 | 192 | 256 |
| S1 | Nombre circuits élémentaires | 64GI | 64GI | 64GI |
| | | 64D1 | 64D1 | 64D1 |
| | | 128M1 | 192M1 | 256M1 |
| | | 64PA | 64PA | 64PA |
| | Prix relatif sans Prix relatif sans PA | | | |
| | | 198,2 | 262,4 | 326 |
| | | | | |
| | Prix relatif total | 582,2 | 646,4 | 710 |
| S2 | Nombre circuits élémentaires | | | 256GI |
| | | 128GI | 192GI | |
| | | | | |
| | | 128D2 | 192D2 | |
| | | | | 256D2 |
| | | 64PA | 64PA | |
| | | | | 64PA |
| | Prix relatif sans PA | | | |
| | | 140,8 | 211,2 | 281,6 |
| | | | | |
| | Prix relatif total | 524,8 | 595,2 | 665,6 |
| S3 | Nombre circuits élémentaires | 64GI | 64GI | 64GI |
| | | 128D2 | 192D2 | 256D2 |
| | | 128M2 | 192M2 | 256M2 |
| | | 64PA | 64PA | 64PA |
| | Prix relatif sans PA | 128 128 | 160 160 | 192 192 |
| | Prix relatif total | 512 | 544 | 576 |

Il faut noter que les solutions S2 et S3 ne nécessitent pas d'alimentation en puissance dédiée pour le multiplexeur (ce qui entraîne une réduction de coût supplémentaire), et présentent de meilleures performances. Finalement, on arrive à obtenir une amélioration de 1 à 2 dB du rapport signal/bruit de l'échographe (en fonction des caractéristiques de sa sonde).

## Revendications

1. Structure d'entrée pour échographe à ultrasons, comportant un diplexeur (4, 8) branché entre, d'une part, une sonde (1, 16) et un générateur d'impulsions (3, 7) et d'autre part un préamplificateur (5, 9), le diplexeur étant du type comprenant un pont de diodes (13) dont un sommet est relié par une première résistance (12) à une source de tension positive (10) et dont le sommet opposé est relié par une deuxième résistance (14) à une source de tension négative (11), un troisième sommet de ce pont recevant, via un condensateur (17) et une résistance (16), les signaux d'entrée à transmettre ou à atténuer selon qu'ils proviennent de la sonde ou du générateur d'impulsions, le quatrième sommet de ce pont étant relié à la masse par un condensateur (18) en série avec un circuit parallèle comprenant une résistance (20) et deux diodes montées en anti-parallèle (21, 22), l'autre pôle desdites sources de tension, du générateur d'impulsions et de la sonde étant relié à la masse, **caractérisé par le fait que** l'on branche dans le diplexeur une diode (23, 24) en parallèle sur chaque résistance (12, 14) reliant l'un des deux premiers sommets du pont à une source de tension (10, 11), ces diodes étant montées dans le sens passant de la source de tension négative vers la source de tension positive, et **par le fait que** l'on relie les deux premiers sommets du pont par une résistance (25).

2. Structure d'entrée selon la revendication 1, **caractérisée par le fait qu'**elle comporte un multiplexeur (26, 60) branché entre, d'une part, le générateur d'impulsions (58), et d'autre part la sonde (55) et le diplexeur (57).

3. Structure d'entrée selon la revendication 2, **caractérisé par le fait que** le multiplexeur (26) comporte, entre une borne d'entrée (28) et une borne intermédiaire (38) deux branches parallèles comportant, chacune le trajet drain-source d'un transistor (33, 39) en série entre deux diodes (31-34 et 32, 40), la grille de chacun des transistors étant reliée par une résistance (35, 41) à une source de tension (36, 42) et par un condensateur (37, 43) à sa source, les diodes de l'une des branches étant en anti-parallèle par rapport aux diodes de l'autre branche, la borne intermédiaire étant reliée à la masse par un circuit parallèle comportant dans une branche un condensateur (44) et dans une autre branche deux diodes en anti-parallèle (45, 46) en série avec un condensateur, le point commun à ces deux diodes et au condensateur étant la sortie (29) du multiplexeur.

4. Structure d'entrée selon la revendication 3, **caractérisé par le fait que** les transistors sont de type VMOS.

## Claims

1. Front-end conditioning structure for ultrasonic echography, comprising a diplexer (4, 8) connected between, on the one hand, a probe (1, 16) and a pulse generator (3, 7) and, on the other hand, a preamplifier (5, 9), the diplexer being of the type comprising a diode bridge (13), one vertex of which is connected via a first resistor (12) to a positive voltage source (10) and the opposite vertex of which is connected via a second resistor (14) to a negative voltage source (11), a third vertex of this bridge receiving, via a capacitor (17) and a resistor (16), the input signals to be transmitted or attenuated depending on whether they come from the probe or from the pulse generator, the fourth vertex of this bridge being earthed via a capacitor (18) in series with a parallel circuit comprising a resistor (20) and two antiparallel-mounted diodes (21, 22), the other pole of said voltage sources, of the pulse generator and of the probe being earthed, **characterized in that**, in the diplexer, a diode (23, 24) is parallel-connected to each resistor (12, 14) connecting one of the first two vertices of the bridge to a voltage source (10, 11), these diodes being mounted in the direction corresponding to induction from the negative voltage source to the positive voltage source, and **in that** the two first vertices of the bridge are connected via a resistor (25).

2. Front-end conditioning structure according to Claim 1, **characterized in that** it comprises a multiplexer (26, 60) connected between, on the one hand, the pulse generator (58) and, on the other hand, the probe (55) and the diplexer (57).

3. Front-end conditioning structure according to Claim 2, **characterized in that** the multiplexer (26) comprises, between an input terminal (28) and an intermediate terminal (38), two parallel legs, each comprising the drain-source path of a transistor (33, 39) in series between two diodes (31-34 and 32, 40), the gate of each of the transistors being connected via a resistor (35, 41) to a voltage source (36, 42) and via a capacitor (37, 43) to its source, the diodes of one of the legs being antiparallel-connected with respect to the diodes of the other leg, the intermediate terminal being earthed via a parallel circuit comprising, in one leg, a capacitor (44) and, in the other leg, two antiparallel-connected diodes (45, 46) in series with a capacitor, the point common to these two diodes and to the capacitor being the output (29) of the multiplexer.

4. Front-end conditioning structure according to Claim 3, **characterized in that** the transistors are of the VMOS type.

## Patentansprüche

1. Eingangsanordnung für einen Ultraschallechographen, mit einem Diplexer (4, 8), der zwischen einerseits eine Sonde (1, 16) und einen Impulsgenerator (3, 7) und andererseits einen Vorverstärker (5, 9) geschaltet ist, wobei der Diplexer von dem Typ ist, der eine Diodenbrücke (13) enthält, von der ein Knoten über einen ersten Widerstand (12) mit einer positiven Spannungsquelle (10) verbunden ist, und deren gegenüberliegender Knoten über einen zweiten Widerstand (14) mit einer negativen Spannungsquelle (11) verbunden ist, wobei ein dritter Knoten dieser Brücke über einen Kondensator (17) und einen Widerstand (16) die Eingangssignale empfängt, die je nachdem, ob sie von der Sonde oder vom Impulsgenerator kommen, zu übertragen oder zu dämpfen sind, wobei der vierte Knoten dieser Brücke über einen Kondensator (18) an Masse gelegt ist, der in Reihe mit einer parallelen Schaltung geschaltet ist, die einen Widerstand (20) und zwei antiparallel geschaltete Dioden (21, 22) aufweist, wobei der andere Pol der Spannungsquellen, des Impulsgenerators und der Sonde an Masse gelegt ist, **dadurch gekennzeichnet, dass** im Diplexer eine Diode (23, 24) mit jedem Widerstand (12, 14) parallelgeschaltet wird, der einen der zwei ersten Knoten der Brücke mit einer Spannungsquelle (10, 11) verbindet, wobei diese Dioden in der von der negativen Spannungsquelle zur positiven Spannungsquelle leitenden Richtung montiert sind, und dass die beiden ersten Knoten der Brücke von einem Widerstand (25) miteinander verbunden werden.

2. Eingangsanordnung nach Anspruch 1, **dadurch gekennzeichnet, dass** sie einen Multiplexer (26, 60) aufweist, der zwischen einerseits den Impulsgenerator (58) und andererseits die Sonde (55) und den Diplexer (57) geschaltet ist.

3. Eingangsanordnung nach Anspruch 2, **dadurch gekennzeichnet, dass** der Multiplexer (26) zwischen einer Eingangsklemme (28) und einer Zwischenklemme (38) zwei parallele Zweige aufweist, die je die Drain-Source-Strecke eines Transistors (33, 39) enthalten, der in Reihe zwischen zwei Dioden (31-34 und 32, 40) geschaltet ist, wobei das Gate jedes der Transistoren über einen Widerstand (35, 41) mit einer Spannungsquelle (36, 42) und über einen Kondensator (37, 43) mit seiner Source verbunden ist, wobei die Dioden eines der Zweige bezüglich der Dioden des anderen Zweigs antiparallel geschaltet sind, wobei die Zwischenklemme von einer parallelen Schaltung an Masse gelegt wird, die in einem Zweig einen Kondensator (44) und in einem anderen Zweig zwei antiparallel geschaltete Dioden (45, 46) in Reihe mit einem Kondensator aufweist, wobei der diesen beiden Dioden und dem Kondensator gemeinsame Punkt der Ausgang (29) des Multiplexers ist.

4. Eingangsanordnung nach Anspruch 3, **dadurch gekennzeichnet, dass** die Transistoren VMOS-Transistoren sind.
